Europäisches Patentamt

European Patent Office

Office européen des brevets

(19)

(11) Publication number: **0 095 267**
**B1**

(12) **EUROPEAN PATENT SPECIFICATION**

(45) Date of publication of patent specification: **09.04.86**

(51) Int. Cl.⁴: **F 15 B 15/20, G 01 D 5/20**

(21) Application number: **83302555.4**

(22) Date of filing: **06.05.83**

(54) Hydraulic motor comprising a position transducer.

(30) Priority: **10.05.82 US 376476**

(43) Date of publication of application:
**30.11.83 Bulletin 83/48**

(45) Publication of the grant of the patent:
**09.04.86 Bulletin 86/15**

(84) Designated Contracting States:
**AT BE CH DE FR GB IT LI NL SE**

(56) References cited:
**EP-A-0 074 301**
**GB-A- 883 781**
**US-A-3 289 479**
**US-A-3 438 306**

(73) Proprietor: **DEERE & COMPANY**
**1 John Deere Road**
**Moline Illinois 61265 (US)**

(72) Inventor: **Espiritu Santo, Eugenio**
**1720 Cottage Lane**
**Cedar Falls Iowa 50613 (US)**
Inventor: **Banke, Kerry Ottomar**
**6026 Poppy Street**
**LaMesa California 92041 (US)**
Inventor: **Bluem, Gary Raymond**
**200 Black Oaks Lane**
**Wayzata Minnesota, 55391 (US)**
Inventor: **Kluge, Douglas Jacob**
**7979 Jonellen Lane**
**Golden Valley Minnesota 55427 (US)**

(74) Representative: **Pears, David Ashley**
**REDDIE & GROSE 16 Theobalds Road**
**London WC1X 8PL (GB)**

Courier Press, Leamington Spa, England.

## Description

This invention relates to a hydraulic motor of the kind defined in the introductory part of claim 1.

There have been many attempts to construct piston and cylinder motors with built-in, position-sensing devices. In particular it has been proposed to utilise variable transformers as the sensing devices. However, typical variable transformers, such as linear variable displacement transformers with different windings (e.g. US—A—3 289 479 and US—A—3 438 306) which can measure displacements in the range of the stroke of an ordinary hydraulic cylinder which has a stroke length of between 25 and 250 mm, are very expensive. A motor in accordance with the introductory part of claim 1 is known from GB—A—883 781. In this reference the length of the solenoid is equal to the total travel of the control element which means that the ratio of the secondary signals becomes highly indeterminate at one end of the stroke. Moreover, both the core member and the primary winding exhibit significant axial discontinuities so that the ratio will not be a smoothly varying signal. Accordingly it is necessary to provide a separate fine measurement system.

Accordingly the object of the present invention is to provide an improved and simpler motor which has a linear response.

The invention is characterised in the manner set out in claim 1.

The invention will now be described in more detail, by way of example, with reference to the accompanying drawings, in which:

Fig. 1 is a partial sectional view of a position-sensing fluid motor embodying the present invention.

Fig. 2 is a sectional view along line 2—2 of Fig. 1.

Fig. 3 is a schematic circuit diagram of a circuit for use with the position-sensing fluid motor of Fig. 1.

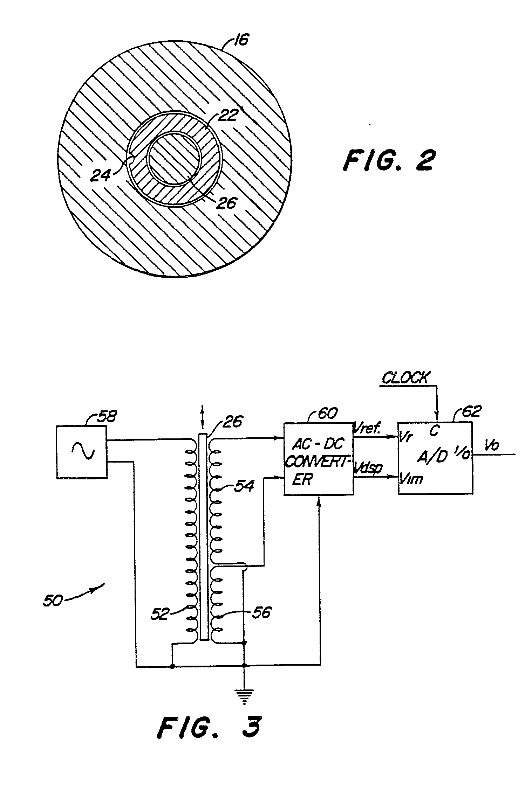

A fluid motor 10 includes a cylinder 12 within which reciprocates a piston 14 and rod 16. A blind stepped bore 17 extends axially into the piston 14 and rod 16. A housing 18 at the head end of the cylinder 12 receives a screwed-in fitting 20 which rigidly supports one end of a hollow cylindrical coil support tube 22 which is constructed of an electrical insulating material, such as glass-reinforced epoxy resin. The tube 22 includes a longitudinally extending groove 24 in its outer surface, as best seen in Fig. 2. The tube 22 almost completely fills the large portion of the bore 17 when the motor 10 is fully retracted. The tube 22 and bore 17 are long enough so that part of the tube 22 remains within the piston 14 when the motor 10 is fully extended.

A magnetic steel core rod 26 is press-fitted into the small portion of the blind bore 17 and extends to an end 28 which is contiguous with the plane of the end face 30 of piston 14. A single layer coil of wire is wrapped in a spiral bifilar manner around the outer surface of tube 22 from a position indicated by reference numeral 32 to the end 34 of tube 22. One of the filaments of the bifilar wound coil is continuous, extends the entire length of the coil and forms the primary coil 52 or winding of a 3-coil or winding transformer. The other filament is broken into two coil or winding portions, one of which extends from 32 to a position indicated by reference numeral 36 and is hereinafter referred to as the displacement coil 54. The remaining portion of the other filament extends from 36 to 34 and forms what will be hereinafter referred to as the reference coil 56. The leads to the various coils are routed through and along the groove 24, but are shown removed from Fig. 2 for clarity.

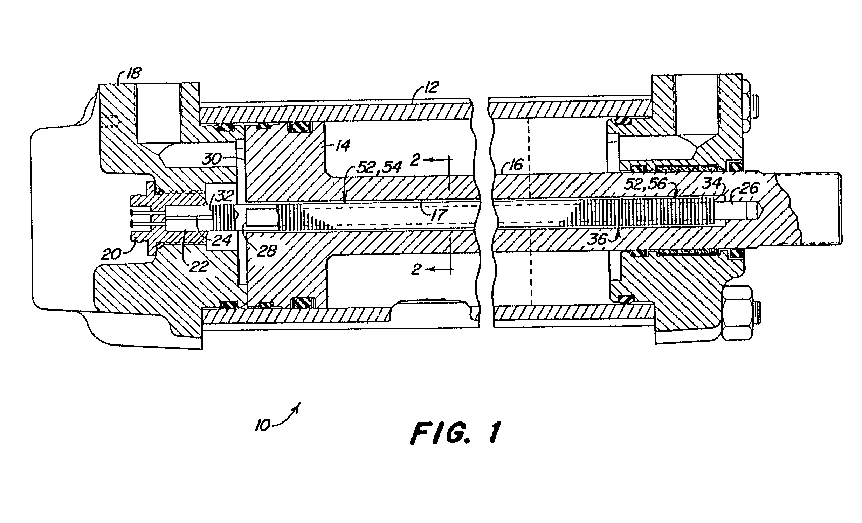

From the foregoing description and with reference to Fig. 1, the following relationships will be apparent. The displacement coil 54 extends from 32 to 36 and is longer than the stroke of the piston 14. The reference coil 56 extends from 36 to 34 and is totally penetrated by at least a portion of the core 26, regardless of the position of the piston 14 and rod 16 with respect to the cylinder 12.

Note also that the break between the secondary coils 54 and 56, indicated by reference numeral 36, may be positioned at various places so as to vary the relative lengths of the displacement and reference coils while their overall or combined lengths remain substantially equal to the length of the primary coil (which extends from 32 to 34). Satisfactory operation may be obtained for ratios of displacement to reference coil lengths varying from a ratio of 6 to 1 to a ratio of approximately 7 to 1. It should further be noted that the end 32 of the coils is placed a finite distance beyond the end 28 of the core 26.

The following dimensions are given by way of example only to illustrate dimensions which have been found to be suitable for a fluid motor as shown in Fig. 1 with a 200 mm stroke. The distance between 32 and 28 is 12.5 mm; the distance between 32 and 36 is 250 mm; and the distance between 36 and 34 is 40 mm.

Fig. 3 schematically shows a circuit 50 for exciting the primary coil 52 and for deriving a position representative signal from the voltages across the displacement coil 54 and the reference coil 56. Circuit 50 includes a sinusoidal signal generator 58 which applies to the primary coil 52, an AC sinusoidal signal with a peak-to-peak voltage of approximately 10 volts and a current which varies from 75 to 150 milliamperes, approximately, depending upon the position of the core 26 relative to the coils. A conventional AC-to-DC converter 60 converts the induced sinusoidal voltages across the displacement coil 54 and the reference coil 56 to DC voltages Vdsp and Vref, respectively. The voltage Vref is applied to the Vr input of an analog-to-digital converter 62, such as National Semiconductors ADC 0831, which is an A/D converter with serial input/output, compatible with 8-bit microprocessors. The voltage Vdsp is applied to the Vin input of the converter 62. A 5 to 10 kilohertz squarewave clock signal is applied to the clock input C of the converter 62. The converter 62 generates at its I/O output terminal a serial digital output signal, Vo, which is proportional to the ratio of the voltage Vdsp to the voltage Vref. This ratiometric digital output signal Vo has a desirable linear dependence upon the position of the piston 14 within the cylinder 12 and thus provides an accurate indication of the positional status of the fluid motor 10. Any temperature or impurity-induced variations in the voltages across the displacement and reference coils, 54 and 56, are cancelled out by the division which creates the ratio voltage Vo. Thus, the output Vo is substantially independent of temperature or impurity effects.

### Claims

1. A hydraulic motor (10) comprising a cylinder assembly (12), a piston assembly (14, 16) slidable therein, and a position transducer comprising windings (52, 54, 56) fixed to one of the assemblies, and a core member (26) fixed to the other assembly so as to extend into the windings an amount dependent upon the position of the piston assembly relative to the cylinder assembly, the windings consisting of a primary winding (52) and first and second end-to-end secondary windings (56, 54), the first second winding (56) being shorter than the second secondary winding (54) and being totally penetrated by the core member (26) regardless of the said relative position, the second secondary winding (54) being penetrated by the core member (26) to an extent which varies over the whole range of relative positions, and the primary winding (52) having a length equalling the combined lengths of the two secondary windings, characterised in that each winding (52, 54, 56) and the core member (26) are all axially continuous, in that the second secondary winding (54) is at least six times as long as first secondary winding (56) and is longer than the stroke of the piston assembly (14, 16) in the cylinder assembly, so that the second secondary winding is always partially penetrated by the core member (26).

2. A hydraulic motor according to claim 1, characterised by a hollow cylindrical coil support (22) having one end rigidly fixed to the cylinder assembly (12), and a wire wrapped in a spiral bifilar manner around the coil support, one of the filaments of the bifilar wrapped wire forming the primary winding (52), the other filament of the bifilar wrapped wire being split into two portions (54, 56) each portion forming one of the secondary coils.

3. A hydraulic motor according to claim 1 or 2, further comprising a circuit (50) for applying an AC excitation signal to the primary winding (52) and for converting signals from the secondary windings (54, 56) to an output signal indicative of the position of the hydraulic motor, converter means (60) for converting the secondary coil signals to a pair of corresponding DC signals; and a ratiometric analog-to-digital converter (62) for converting the DC signals to an output signal representing the ratio of the DC signals.

### Patentansprüche

1. Hydraulikmotor (10) mit einer Zylinderanordnung (12), einer Kolbenanordnung (14, 16), die in dieser gleiten kann und mit einem Stellungswandler, der Wicklungen (52, 54, 56), welche mit einer dieser Anordnungen verbunden sind, sowie ein Kernelement (26) umfaßt, das mit der anderen Anordnung so verbunden ist, daß es sich in die Wicklungen in einem Ausmaß hinein erstreckt, das abhängig ist von der Stellung der Kolbenanordnung gegenüber der Zylinderanordnung, wobei die Wicklungen aus einer Primärwicklung (52) und ersten und zweiten Ende an Ende anschließenden Sekundärwicklungen (56, 54) bestehen, wobei die erste Sekundärwicklung (56) kürzer ist als die zweite Sekundärwicklung (54) und vollständig von dem Kernelement (26) unabhängig von der genannten Relativstellung durchdrungen wird, wobei die zweite Sekundärwicklung (54) von dem Kernelement (26) in einem Ausmaß durchdrungen ist, welches über den ganzen Bereich der relativen Stellungen variiert und wobei die Primärwicklung (52) eine Länge gleich der Kombinierten Längen der beiden Sekundärwicklungen aufweist, dadurch gekennzeichnet, daß jede Wicklung (52, 54, 56) und das Kernelement (26) alle axial kontinuierlich ausgebildet sind, daß die zweite Sekundärwicklung (54) wenigstens sechsmal so lang wie die erste Sekundärwicklung (56) und länger als der Hub der Kolbenanordnung (14, 16) in der Zylinderanordnung ist, so daß die zweite Sekundärwicklung sechsmal stets teilweise von dem Kernelement (26) durchdrungen ist.

2. Hydraulikmotor nach Anspruch 1, gekennzeichnet durch einen hohlen zylindrischen Spulenträger (22), dessen eines Ende starr mit der Zylinderanordnung (12) verbunden ist, und durch einen Draht, der in spiralförmiger bifilarer Weise um den Spulenträger gewickelt ist, wobei einer der Drähte des bifilar gewickelten Drahtes die Primärwicklung (52) bildet und der andere Draht des bifilar gewickelten Drahtes in zwei Abschnitte (54, 56) aufgespalten ist, wobei jeder Abschnitt eine der Sekundärwicklungen bildet.

3. Hydraulikmotor nach Anspruch 1 oder 2, der weiterhin einen Kreis (50) zum Anlegen eines Wechselstromerregersignals an die Primärwicklung (52) und zum Wandeln von Signalen von den Sekundärwicklungen (54, 56) in ein Ausgangssignal, das die Stellung des Hydraulikmotors wiedergibt, Wandlermittel (60) zum Wandeln der Signale der Sekundärspule in zwei korrespondierende Gleichstromsignale; und einen quotientmäßig arbeitenden Analog/Digital-Wandler (62) zum Wandeln der Gleichstromsignale in ein Ausgangssignal, welches das Verhältnis der Gleichstromsignale repräsentiert, umfaßt.

### Revendications

1. Vérin hydraulique (10) comportant un cylindre (12), un système de piston (14, 16) pouvant coulisser dans ce cylindre, et un transducteur de position comportant des enroulements (52, 54, 56) fixé sur ce cylindre ou sur ce système de piston, et un noyau (26) fixé sur l'autre élément parmi ce cylindre et ce système de piston, de façon à pénétrer dans le enroulements à un degré fonction de la position du système de piston par rapport au cylindre, les enroulements comprenant un enroulement primaire (52) et un premier et un second enroulements secondaires (56, 54) disposés bout-à-bout, le premier enroulement secondaire (56) étant plus court que le second eenroulement secondaire (54) et le noyau (26) 26 le traversant complètement indépendamment de ladite position relative, le noyau (26) pénétrant dans le second enroulement secondaire (54) à un degré qui varie sur toute la gamme des positions relatives, et l'enroulement primaire (52) ayant une longueur égale aux longueurs combinées des deux enroulements secondaires, caractérisé en ce que chaque enroulement (52, 54, 56) et le noyau (26) sont tous axialement continus, en ce que le second enroulement secondaire (54) est au moins six fois aussi long que le premier enroulement secondaire (56) et a une longueur supérieure à la course du système de piston (14, 16) dans le cylindre, de sorte que le noyau (26) pénètre toujours partiellement dans le second enroulement secondaire.

2. Vérin hydraulique suivant la revendication 1, caractérisé par un support de bobine cylindrique creux (22) dont une extrémité est fixée rigidement sur le cylindre (12), et par un fil conducteur enroulé en spirale selon un mode bifilaire autour du support, l'un des filaments du conducteur enroulé selon un mode bifilaire formant l'enroulement primaire (52), l'autre filament du conducteur enroulé selon un mode bifilaire étant divisé en deux parties (54, 56), chaque partie formant l'un des enroulements secondaires.

3. Vérin hydraulique suivant la revendication 1 ou 2, caractérisé en ce qu'il comprend en outre un circuit (50) pour appliquer un signal d'excitation en courant alternatif à l'enroulement primaire (52) et pour convertir les signaux provenant des enroulements secondaires (54, 56) en un signal de sortie indiquant la position du vérin hydraulique, des moyens convertisseurs (60) pour convertir les signaux des enroulements secondaires en une paire de signaux correspondants en courant continu, et un convertisseur analogique-digital (62) étalonné en rapports, pour convertir les signaux en courant continu en un signal de sortie représentant le rapport entre ces signaux en courant continu.

FIG. 1

FIG. 2

FIG. 3